Europäisches Patentamt

European Patent Office

Office européen des brevets

(11) Veröffentlichungsnummer: **0 400 589**
**A2**

## (12) EUROPÄISCHE PATENTANMELDUNG

(21) Anmeldenummer: **90110210.3**

(22) Anmeldetag: **30.05.90**

(51) Int. Cl.⁵: **B60R 1/08**

(30) Priorität: **01.06.89 DE 3917871**

(43) Veröffentlichungstag der Anmeldung:
**05.12.90 Patentblatt 90/49**

(84) Benannte Vertragsstaaten:
**BE DE ES FR GB IT NL SE**

(71) Anmelder: **HOHE KG**
**Hauptstrasse 36**
**D-6981 Collenberg(DE)**

(72) Erfinder: **Müller, Rolf, Dr.**
**Försterstrasse 26**
**D-6600 Saarbrücken(DE)**

(74) Vertreter: **Bernhardt, Winfrid, Dr.-Ing.**
**Kobenhüttenweg 43**
**D-6600 Saarbrücken(DE)**

(54) **Abblendbarer Spiegel.**

㉗ Ein Rückspiegel für ein Kraftfahrzeug hat einen stufenlos veränderbaren Reflexionsgrad dadurch, daß er vor seiner Spiegelscheibe (6) eine durchsichtige Scheibe (3) aufweist, deren Abstand von der Spiegelscheibe (6) durch eine von einer den Lichteinfall messenden Photozelle gesteuerte Einrichtung (8,16,18) veränderbar ist, und daß der dementsprechende Zwischenraum (15) zwischen der Spiegelscheibe (6) und der durchsichtigen Scheibe (3) mit einer lichtabsorbierenden Flüssigkeit (8) gefüllt und mit einem Reservoir (10) für die Flüssigkeit (8) verbunden ist.

Der Zwischenraum (15) liegt einschließlich der Spiegelscheibe (6) in einem aus durchsichtigem Material bestehenden Beutel (9), dessen übriges Volumen das Reservoir (10) bildet.

Die Flüssigkeit (8) ist eine magnetische Flüssigkeit, und hinter der Spiegelscheibe (6) ist eine Magnetspule (16) derart angeordnet, daß sie bei Erregung die Flüssigkeit (8) in den genannten Zwischenraum (15) zieht gegen eine die Spiegelscheibe (6) und die durchsichtige Scheibe (3) aufeinander zu drückende Rückstellkraft (18).

Die lichtabsorbierende Flüssigkeit und damit der Spiegel kann farbneutral sein oder auch eine gewünschte, z.B. blaue, Färbung haben. Es ist ein maximaler Reflexionsgrad von über 90% möglich und ein minimaler Reflexionsgrad von unter 5%.

Fig. 2

## Abblendbarer Spiegel

Die Erfindung betrifft einen Spiegel, insbesondere einen Rückspiegel für ein Kraftfahrzeug, mit einem, insbesondere gesteuert von mindestens einer den Lichteinfall messenden Photozelle, stufenlos oder in Stufen veränderbaren Reflexionsgrad.

Als solche Rückspiegel sind Spiegel mit einer elektrochromen Beschichtung in Gebrauch.
Als nachteilig an diesen Spiegeln werden eine gelbbraune Tönung, ein zu geringes maximales und ein zu hohes minimales Reflexionsvermögen, lange Schaltzeiten bei Kälte und eine begrenzte Lebensdauer empfunden.

Weitere solche Spiegel sind aus der europäischen Veröffentlichungsschrift 0 240 226 bekannt. Statt einer festen Beschichtung ist nach dieser Schrift der Spiegelfläche eine flache Kammer vorgeschaltet, die mit einer einen elektrochromen, einen thermochromen, einen photochromen oder einen elektro-optischen Stoff enthaltenden Flüssigkeit gefüllt ist.

Ein weiteres bekanntes Mittel, den Reflexionsgrad eines Rückspiegels zu verändern, ist eine ebenso angeordnete Flüssigkeit mit liquid-crystal-Eigenschaft.
Schließlich sind aus der DE-PS 33 02 630 sogenannte PLZT-Spiegel für den genannten Zweck bekannt, bei denen das Reflexionsvermögen mit Hilfe einer optisch aktiven Keramik gesteuert wird.

Auch alle diese anderen Rückspiegel haben u.a. den oben von den elektrochromen Beschichtungen angegebenen Nachteil eines zu geringen maximalen und zu hohen minimalen Reflexionsvermögens.

Der Erfindung liegt die Aufgabe zugrunde, einen gleichfalls stufenlos, aber in weiten Grenzen veränderbaren Spiegel zu schaffen.

Die Erfindung greift zu diesem Zweck die bisher ausschließlich zum Umschalten zwischen einer Hell- und einer Dunkel-Stellung bekannte, in der US-PS 3 567 312 schon als Stand der Technik angegebene und in der europoäischen Veröffentlichungsschrift 0 186 391 weiter behandelte Technik auf, mit der Extinktion einer Flüssigkeit abzublenden.
Sie schlägt für einen Spiegel der eingangs genannten Art vor, daß er vor seiner Spiegelscheibe eine durchsichtige Scheibe aufweist, deren Abstand von der Spiegelscheibe durch eine gesteuerte Einrichtung stufenlos oder in Stufen veränderbar ist, und daß der dementsprechende Zwischenraum zwischen der Spiegelscheibe und der durchsichtigen Scheibe mit einer lichtabsorbierenden Flüssigkeit gefüllt und mit einem Reservoir für die Flüssigkeit verbunden ist.

Durch die veränderbare Schichtdicke der Flüssigkeit wird die Lichtabsorption gesteuert und damit das Reflexionsvermögen des Spiegels. Auf diesem Wege kann ein maximaler Reflexionsgrad von über 90% erreicht werden gegenüber 50 bis 70% bei elektrochromen Spiegeln und ein minimaler Reflexionsgrad von unter 5% gegenüber etwa 6 bis 10%; das Verhältnis zwischen maximaler und minimaler Reflexion liegt bei den elektrochromen Spiegeln immer nur bestenfalls bei 5 : 1.

Die lichtabsorbierende Flüssigkeit und damit der Spiegel kann farbneutral sein oder auch eine gewünschte, z.B. blaue, Färbung haben.
Unabhängig von der Temperatur ergeben sich kurze Schaltzeiten über den gesamten Bereich von minimaler bis maximaler Abbledung. Eine individuell gewünschte Verzögerung läßt sich durch Einbau eines einstellbaren Verzögerungselementes erlangen.

Kein Element des neuen Spiegels ist von ausgeprägt begrenzter Lebensdauer.

Nach einer besonders vorteilhaften Weiterbildung der Erfindung liegt der Zwischenraum, vorzugsweise einschließlich der Spiegelscheibe, in einem aus durchsichtigem Material bestehenden Beutel, dessen übriges Volumen das Reservoir bildet.

Der Beutel löst alle Dichtungsprobleme, die man ohne ihn hätte. Er kann unter Luftausschluß gefüllt und luftdicht verschlossen werden, so daß die Flüssigkeit immer blasenfrei bleibt.

Außerhalb des Zwischenraumes kann man den Beutel an der Wand des Gehäuses, das der Spiegel regelmäßig haben wird, nach hinten herumlegen und damit genügend Volumen für das Reservoir zur Verfügung stellen.

Die durchsichtige Scheibe kann gleichfalls in dem Beutel liegen, wobei dieser vor der durchsichtigen Scheibe durch eine weitere durchsichtige Scheibe abgedeckt ist und mit beiden Scheiben verklebt oder verklemmt ist.
Die durchsichtige Scheibe kann aber auch von außen an dem Beutel anliegen und mit ihm verklebt sein, so daß die weitere Scheibe eingespart wird.

In weiterer Ausgestaltung der Erfindung wird vorgeschlagen, die durchsichtige Scheibe, ggf. zusammen mit der weiteren durchsichtigen Scheibe, im Gehäuse des Spiegels fest anzuordnen und die Spiegelscheibe an einem an einer Führung, vorzugsweise aus mehreren Stangen, parallel zu sich selbst verschiebbaren Träger anzuordnen.

So ist ein geschlossenes Gehäuse möglich, in dem die beweglichen Teile geschützt liegen.

Als eine Variante des neuen Spiegels ist vorgesehen, daß der Träger durch einen Stellmotor, vorzugsweise über ein Zahnstangengetriebe und Exzenterführungen, verstellbar ist. Durch die Verstellung wird die Flüssigkeit in den Zwischenraum eingesaugt oder aus ihm herausgedrückt.

Als andere Variante ist als Weiterbildung der Erfindung vorgesehen, daß die Flüssigkeit eine magnetische Flüssigkeit ist und hinter der Spiegelscheibe eine ein magnetisches Feld erzeugende Einrichtung, vorzugsweise eine Magnetspule, derart angeordnet ist, daß sie bei Erregung die Flüssigkeit in den genannten Zwischenraum zieht gegen eine die Spiegelscheibe und die durchsichtige Scheibe aufeinander zu drückende Rückstellkraft, die durch Federn erzeugt werden kann, aber auch anders.

Diese Variante ist besonders kostengünstig und betriebssicher, sie benötigt keine beweglichen Antriebsteile. Bei Stromausfall kehrt sie im Falle der Federn in die Ausgangsstellung, d.h. die Normalstellung, zurück. In beiden Varianten kann die Steuerung eine kapazitative Messung des Abstands zwischen Spiegelscheibe und durchsichtiger Scheibe umfassen, so daß sie den bei einem bestimmten Lichteinfall vorgesehenen Abstand zwischen der Spiegelscheibe und der durchsichtigen Scheibe unmittelbar und damit unbeeinträchtigt von Störeinflüssen anhand dieser Messung einstellen kann.

Bei der Variante der magnetischen Flüssigkeit besteht aber die noch vorteilhaftere Möglichkeit, daß die Steuerung eine Messung des Abstands zwischen Spiegelscheibe und durchsichtiger Scheibe durch Messung der induktiven Kopplung zwischen der Magnetspule und einer neben dieser angeordneten weiteren Magnetspule umfaßt; diese induktive Kopplung ist abhängig von der Schichtdicke der magnetischen Flüssigkeit.

Schließlich ergibt sich die besonders vorteilhafte, kostensparende weitere Möglichkeit, die Magnetspule und/oder die weitere Magnetspule zugleich als Heizspule des Rückspiegels zu verwenden und damit den - sehr häufigen - Aufwand für diese Heizspule in die Abblendung einzubringen, so daß sich diese entsprechend kostengünstiger stellt.

Das oben genannte geschlossene Gehäuse kann aber auch in einer flüssigkeitsdichten Ausführung mit der Flüssigkeit gefüllt sein; der Träger mit der Spiegelscheibe ist dann von der Flüssigkeit seitlich umgeben zur Verbindung mit dem das Reservoir bildenden Gehäuseraum auf der Rückseite des Trägers.
Zweckmäßigerweise weist der Träger an seiner Rückseite eine in einer Dichtung aus dem Gehäuse herausgeführte Stange auf, die mit einem Stellantrieb verbunden ist, vorzugsweise mit einem Hydraulikzylinder, dessen Kolbenstange sie ist.
Stattdessen wäre auch hier eine Magnetspule o. dgl. in Verbindung mit magnetischer Flüssigkeit möglich. Die Magnetspule könnte an der Rückwand des Gehäuses angeordnet sein und gegen eine Federkraft die Flüssigkeit hinter den Halter ziehen und ihn damit nach vorne schieben.

Nach einer besonders vorteilhaften Weiterbildung der Erfindung sind die beiden Zylinderräume nicht ganz dicht voneinander getrennt, so daß eine Feder den Kolben langsam nach vorne drücken kann und damit den Spiegel in Normalstellung bringt, wenn infolge Stromausfalles oder Versagens der Steuerelektronik die hydraulische Steuerung ausfällt. Am einfachsten läßt sich diese Maßnahme mit einem nicht ganz dicht an der Zylinderwand anliegenden Kolben treffen. Es wäre aber auch eine Leckbohrung im Kolben möglich, ein Bypass u.a..

Schließlich wird vorgeschlagen, die Spiegelfläche und die äußere Oberfläche der genannten durchsichtigen Scheibe in einem Winkel, vorzugsweise von 1° bis 5°, zueinander zu stellen, um die Reflexion der äußeren Oberfläche in eine andere Richtung zu lenken als die des Spiegels und damit Störungen des Bildes zu vermeiden, die sich mit zunehmender Abblendung des Spiegels stärker auswirken würden. Im Falle des Innenspiegels eines Kraftfahrzeugs ist der Winkel vorzugsweise nach unten geöffnet, d.h. die äußere Oberfläche gegenüber der Spiegelfläche nach oben abgewinkelt, so daß sie das dunkle Fahrzeugdach ins Auge reflektiert. Im Falle eines Außenspiegels kann man die Anordnung umgekehrt treffen, weil nach oben und auch nach außen weitere Lichtquellen ins Blickfeld kommen können.

Die Zeichnungen geben Ausführungsbeispiele der Erfindung wieder.

Fig. 1 zeigt einen ersten Rückspiegel in einem waagerechten Schnitt,

Fig. 2 zeigt einen zweiten Rückspiegel in einem waagerechten Schnitt,

Fig. 3 zeigt einen dritten Rückspiegel in einem senkrechten Schnitt.

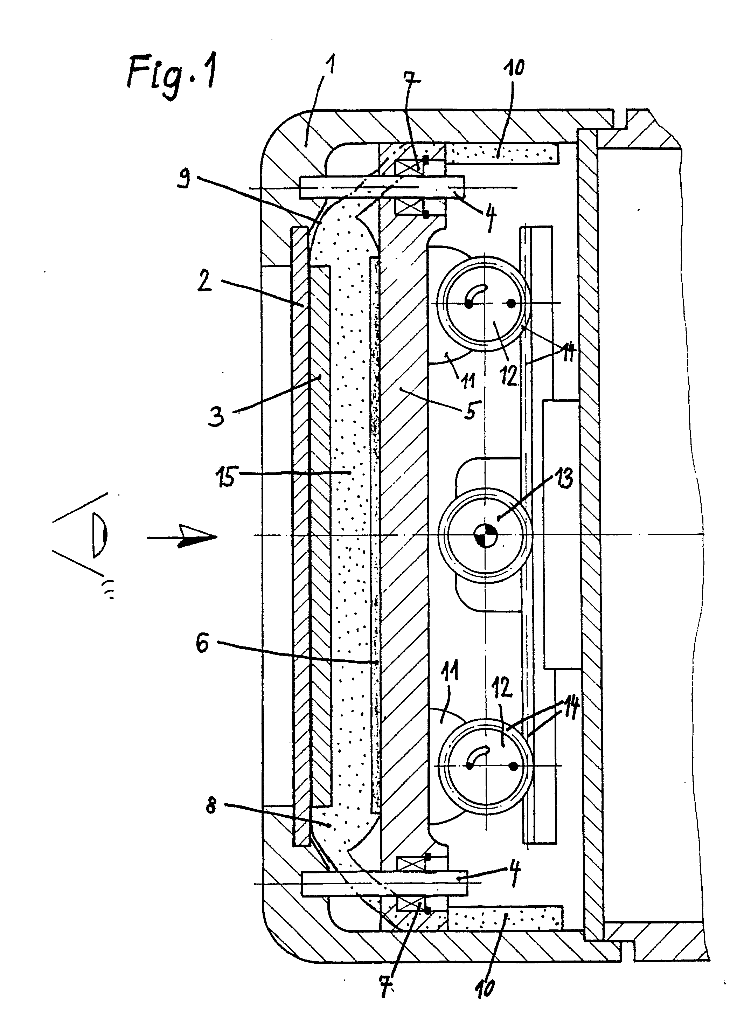

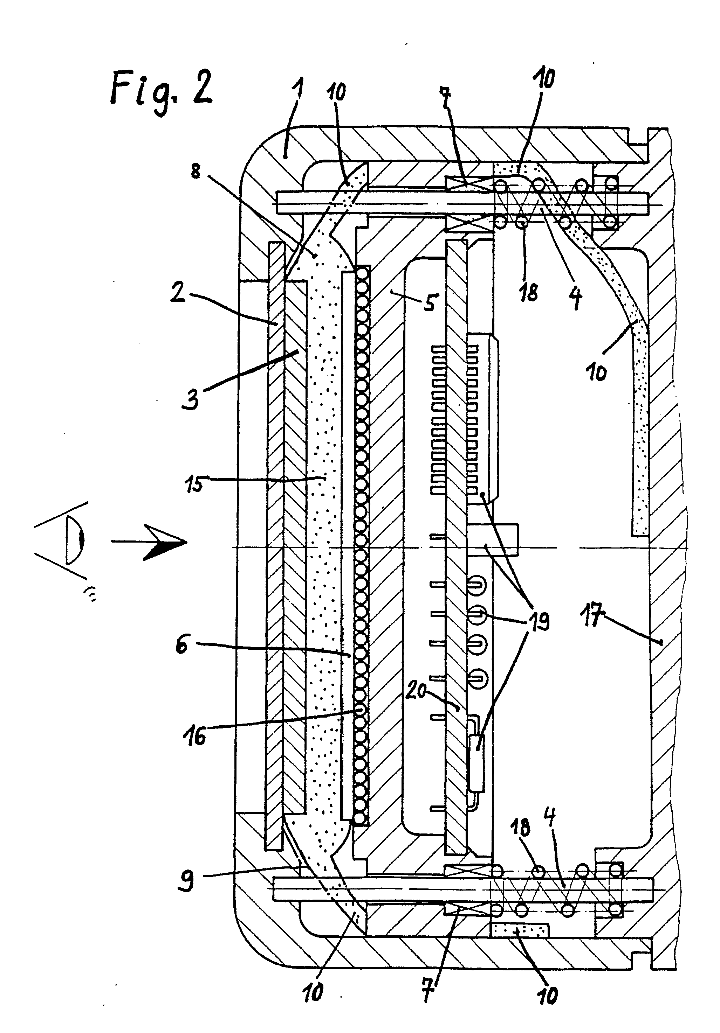

Der Grundaufbau der beiden Rückspiegel nach Fig. 1 und 2 ist gleich:

In einem Gehäuse 1 sitzen in einem Fenster zwei Glasscheiben 2 und 3, die unter Zwischenlegung einer durchsichtigen Folie miteinander verklebt sind; unmittelbar in das Gehäuse eingesetzt ist die Glasscheibe 2.
Die betreffende Sichtscheibe des Rückspiegels sei als "vorne" bezeichnet.

In die vordere Wand des Gehäuses starr eingesetzt sind vier parallele, nach hinten in das Gehäuse 1 hinein sich erstreckende Stangen 4. Die Stangen 4 bilden eine Führung für eine Platte 5, die als Träger für eine Spiegelscheibe 6 dient. Die Platte 5 ist mit Axialgleitlagern 7 derart auf den Stangen 4 geführt, daß sie und damit der Spiegel parallel zu sich selbst verschiebbar sind, d.h. immer die gleiche Ausrichtung behalten.

Ein mit einer lichtabsorbierenden Flüssigkeit 8 gefüllter Beutel 9 aus der oben schon einmal erwähnten durchsichtigen Folie schließt die Spiegelscheibe und die Glasscheibe 3 ein. Er erstreckt sich über diese hinaus mit weiteren Abschnitten 10 nach der Seite und an der Gehäusewand entlang nach hinten.

Bei dem Rückspiegel nach Fig. 1 ist die Spiegelscheibe 6 mit der Folie des Beutels und diese mit der Platte 5 verklebt.

An der Rückseite der Platte 5 sind Konsolen 11 angeordnet, an denen über Exzenter 12 ein von einem Stellmotor 13 ausgehender Zahnstangentrieb 14 angreift.
Mittels dieser, ausgehend von einer nicht gezeichneten, nach vorne gerichteten Photozelle gesteuerten Antriebseinrichtung kann die Platte 5 aus ihrer dargestellten rückwärtigen Endstellung nach vorne verschoben werden bis zur Anlage der Spiegelscheibe 6 an der Glasscheibe oder kurz davor, und zurück. Sie kann in jeder Zwischenstellung stehen. Beim Verschieben nach vorne wird die Flüssigkeit 8 aus dem Zwischenraum 15 zwischen der Spiegelscheibe 6 und der Glasscheibe 3 in die Abschnitte 10 des Beutels 9 verdrängt. Beim Verschieben nach hinten wird sie aus den Abschnitten 10 in den Zwischenraum 15 gezogen.

Je nach dem Abstand zwischen der Spiegelscheibe 6 und der Glasscheibe 3, d.h. der Dicke der Flüssigkeitsschicht in dem Zwischenraum 15, wird mehr oder weniger des einfallenden Lichtes absorbiert, d.h. mehr oder weniger abgeblendet.

Bei dem Rückspiegel nach Fig. 2 ist die Spiegelscheibe 6 wiederum mit der Folie des Beutels 9 verklebt. An diese schließt sich aber nach hinten eine flache, spiralförmig gewickelte Magnetspule 16 an. Zusammengehalten und an der Platte 5 befestigt ist diese Anordnung wiederum durch Verklebung.

Die Stangen 4 reichen hier bis zu einer Gehäuserückwand 17 und dienen zwischen dieser und der Platte 5 als Führungen für Druckfedern 18, die die Platte 5 nach vorne drücken, im Normalzustand bis zum Anliegen der Spiegelscheibe 6 an der Glasscheibe 2. Damit hat der Spiegel im Normalzustand das maximale Reflexionsvermögen.

Wiederum durch Steuerung von einer nicht gezeichneten, nach vorne gerichteten Photozelle aus, wird ab einer bestimmten Intensität des Lichteinfalles die Magnetspule 16 so weit erregt, daß sie die, in diesem Falle magnetische, Flüssigkeit 8 in den Zwischenraum 15 zieht gegen die Federkraft und unter weiterer Anspannung der Druckfedern 18.

Die Kraft des magnetischen Feldes bestimmt jeweils die Dicke der Flüssigkeitsschicht.
Die betreffende, bildhaft dargestellte Steuerung 19 ist an einer Platine 18 an der Rückseite der Platte 5 angeordnet.

Die Zeichnungen sind nicht maßstäblich. Insbesondere ist die Dicke der Flüssigkeitsschicht in dem Zwischenraum 15 aus Darstellungsgründen stark überhöht. In der Praxis könnte die größte Schichtdicke bei etwa 2 - 4 mm liegen, die geringste bei 0,1 oder 0,05 mm. Die größte Schichtdicke ergibt sich aus der gewünschten Abblendung. Die kleinste Schichtdicke wird durch die Vermeidung Newtonscher Ringe bestimmt sowie durch das Bedürfnis, einen gewissen Mindestquerschnitt für das Einfließen der Flüssigkeit zwischen den beiden Oberflächen zur Verfügung zu stellen. Man kann den Mindestabstand durch Anschläge einstellen, zumindest bei mechanischem Antrieb aber auch über die Steuerung.

Denkbar ist auch ein Adhäsionsfilm der Flüssigkeit auf einer Oberfläche oder auf beiden, der dick genug ist, Newtonsche Ringe zu vermeiden. Auch an eine adsorptionsvergrößernde Oberflächenbehandlung wäre zu denken.

Als lichtabsorbierende Flüssigkeit kommt hauptsächlich eine Lösung oder kolloide Lösung, ggf. auch eine noch gröberkörnige Suspension, in einer solchen Grundflüssigkeit in Betracht, die einen möglichst weiten Temperaturbereich im flüssigen Aggregatzustand überdeckt; Innenspiegel sollen etwa von minus 20 bis plus 80 $^\circ$ C, Außenspiegel von minus 40 bis plus 125 $^\circ$ C funktionsfähig sein. Als geeignet erscheinen beispielsweise Äthylpelargonat, Cis-Dekahydrochinolin, Phenylthiobenzol, Glycerin, n-Hexanol, n-Nonan oder auch Gefrierschutzmittel.

Im Falle der magnetischen Flüssigkeit, die eine kolloide Lösung oder Suspension eines ferromagnetischen Stoffes, z.B. Magnetit, sein wird, können die Teilchen dieses Stoffes zugleich die Lichtabsorption bewirken. Auch kann man färbende Zusätze nur oder hauptsächlich um dieser Wirkung willen in der Flüssigkeit lösen.
Anregungen für geeignete Stoffauswahlen stehen in der einschlägigen Literatur zur Verfügung.

Die Reflexionsfläche der Spiegelscheibe 6 kann sich ebenso auf der Vorderseite wie auf der Rückseite befinden. Die erwähnte weitere magnetische Spule könnte auch mit der magnetischen Spule 16 zusammen gewickelt sein derart, daß eine doppelte, zweigängige Spule vorliegt. Die Spiralform der Wicklung braucht nicht rund, sondern kann auch rechtwinklig sein.

Die beiden Spiegel können im Prinzip Innenspiegel wie Außen-Spiegel sein. Alle Rückspiegel eines Fahrzeugs können von derselben, z.B. am Innenspiegel angeordneten Meßeinrichtung aus gesteuert sein. Zusätzlich oder stattdessen ist auch willkürliche Steuerung möglich.

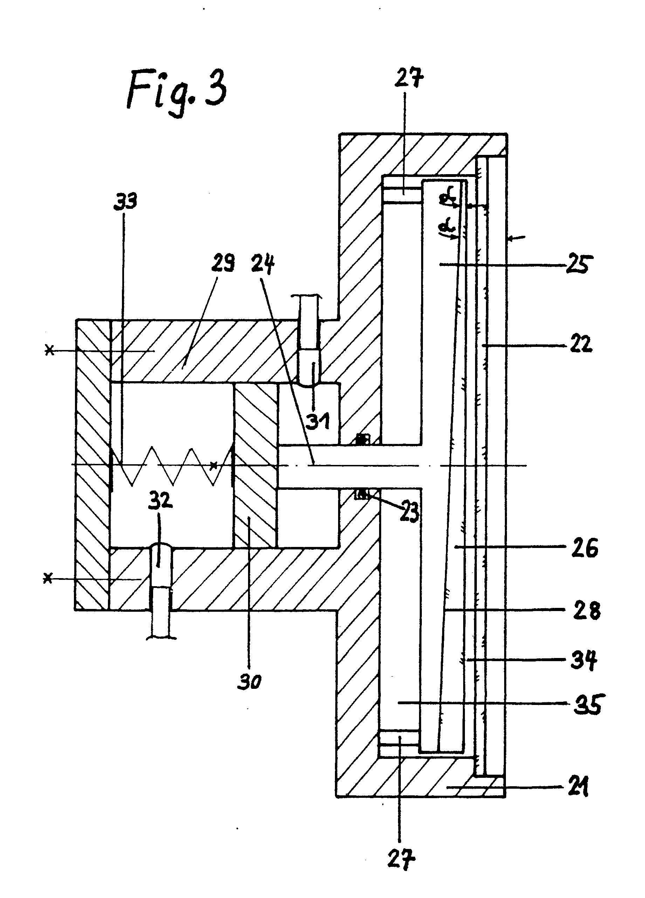

In dem Rückspiegel nach Fig 3 befindet sich die lichtabsorbierende Flüssigkeit nicht in einem Beutel, sondern in dem, hier dicht ausgeführten, Gehäuse 21 des Rückspiegels. Das Gehäuse 21 ist vorne abgeschlossen durch eine Glasscheibe 22 und hinten durch eine Rückwand mit einer mittels eines Dichtringes 23 gedichteten Hindurchführung einer Kolbenstange 24, an der in dem Gehäuse 21 ein Träger 25 mit einer Spiegelscheibe 26 sitzt. Im übrigen ist der Träger 25 wiederum durch vier Stangen 27 für eine Parallelverschiebung geführt. Die Spiegelscheibe 26 ist keilförmig. Ihre Vorderfläche liegt parallel zu der Glasscheibe 22, ihre Spiegelfläche 28 bildet mit der Vorderfläche einen nach unten offenen Winkel α.

An der Rückseite des Gehäuses 21 ist ein Hydraulikzylinder 29 ausgebildet mit einem an der Kolbenstange 24 sitzenden Kolben 30 und zwei Ein- und Auslaßöffnungen 31 und 32 für die Hydraulikflüssigkeit. Eine Feder 33 wirkt auf den, nicht ganz dicht sitzenden, Kolben 30 in Richtung nach vorne, um bei Ausfall der Steuerung des Hydraulikmediums die vorderene Endstellung der Spiegelscheibe 26 sicherzustellen. Bei normaler Funktion wird die Auswirkung der Feder durch Nachregeln in Zeitabständen ausgeglichen.

Die Funktion des Rückspiegels nach Fig. 3 ist analog zu derjenigen der Rückspiegel nach Fig. 1 und 2. Die Photozelle steuert hier jedoch eine Pumpe für die Hydraulikflüssigkeit, und das Reservoir, aus dem die Flüssigkeit bei Vergrößerung des Zwischenraumes 34 zwischen der Spiegelscheibe 26 und der Glasscheibe 22 um den Träger 25 und die Spiegelscheibe 26 herum in den Zwischenraum 34 einströmt und umgekehrt, ist der Gehäuseraum 35 auf der Rückseite des Trägers 25.

## Ansprüche

1. Spiegel, insbesondere Rückspiegel für ein Kraftfahrzeug, mit einem, insbesondere gesteuert von mindestens einer den Lichteinfall messenden Photozelle, stufenlos oder in Stufen veränderbaren Reflexionsgrad,
dadurch gekennzeichnet,
daß der Spiegel vor seiner Spiegelscheibe (6;26) eine durchsichtige Scheibe (3;22) aufweist, deren Abstand von der Spiegelscheibe (6;26) durch eine gesteuerte Einrichtung (11-14;8,16,18; 29-33) stufenlos oder in Stufen veränderbar ist, und daß der dementsprechende Zwischenraum (15;34) zwischen der Spiegelscheibe (6;26) und der durchsichtigen Scheibe (3;22) mit einer lichtabsorbierenden Flüssigkeit (8) gefüllt und mit einem Reservoir (10;35) für die Flüssigkeit (8) verbunden ist.

2. Spiegel nach Anspruch 1,
dadurch gekennzeichnet,
daß der Zwischenraum (15), vorzugsweise einschließlich der Spiegelscheibe (6), in einem aus durchsichtigem Material bestehenden Beutel (9) liegt, dessen übriges Volumen das Reservoir (10) bildet.

3. Spiegel nach Anspruch 2,
dadurch gekennzeichnet,
daß die durchsichtige Scheibe (3) gleichfalls in dem Beutel (9) liegt, wobei dieser vor der durchsichtigen Scheibe (3) durch eine weitere durchsichtige Scheibe (2) abgedeckt ist und mit beiden Scheiben verklebt oder verklemmt ist, oder daß sie von außen an dem Beutel anliegt und mit ihm verklebt ist.

4. Spiegel nach Anspruch 2 oder 3,
dadurch gekennzeichnet,
daß der Beutel (9) außerhalb des Zwischenraums (15) nach hinten herumgelegt (10) ist.

5. Spiegel nach einem der Ansprüche 1 bis 4,
dadurch gekennzeichnet,
daß die durchsichtige(n) Scheibe(n) (3,2;22) in einem Gehäuse (1;21) des Rückspiegels fest angeordnet ist bzw. sind und die Spiegelscheibe (6;26) an einem an einer Führung (4;27), vorzugsweise aus mehreren Stangen (4;27), parallel zu sich selbst verschiebbaren Träger (5;25) angeordnet ist.

6. Spiegel nach Anspruch 5,
dadurch gekennzeichnet,
daß der Träger (5) durch einen Stellmotor (13), vorzugsweise über ein Zahnstangengetriebe (14) und Exzenterführungen (12), verstellbar ist.

7. Spiegel nach einem der Ansprüche 1 bis 5,
dadurch gekennzeichnet,
daß die Flüssigkeit (8) eine magnetische Flüssigkeit ist und hinter der Spiegelscheibe (6) eine ein magnetisches Feld erzeugende Einrichtung, vorzugsweise eine Magnetspule (16), derart angeordnet ist, daß sie bei Erregung die Flüssigkeit (8) in den genannten Zwischenraum (15) zieht gegen eine die Spiegelscheibe (6) und die durchsichtige Scheibe (3) aufeinander zu drückende Rückstellkraft (18).

8. Spiegel nach einem der Ansprüche 1 bis 7,
dadurch gekennzeichnet,
daß die Steuerung eine kapazitative Messung des Abstands zwischen Spiegelscheibe (9) und durchsichtiger Scheibe (3) umfaßt.

9. Spiegel nach Anspruch 7,
dadurch gekennzeichnet,
daß die Steuerung eine Messung des Abstands zwischen Spiegelscheibe (6) und durchsichtiger Scheibe (3) durch Messung der induktiven Kopplung zwischen der Magnetspule (16) und einer neben dieser angeordneten weiteren Magnetspule umfaßt.

10. Spiegel nach Anspruch 7 oder 9,
dadurch gekennzeichnet,
daß die Magnetspule (16) und/oder die weitere Magnetspule zugleich Heizspule(n) ist bzw. sind.

11. Spiegel nach Anspruch 5,

dadurch gekennzeichnet,

daß das Gehäuse (21) dicht ist und vollständig mit der Flüssigkeit gefüllt ist und der Träger (25) mit der Spiegelscheibe (26) von der Flüssigkeit seitlich umgeben ist zur Verbindung mit dem das Reservoir bildenden Gehäuseraum (35) auf der Rückseite des Trägers (25).

12. Spiegel nach Anspruch 11,
dadurch gekennzeichnet,
daß der Träger (25) an seiner Rückseite eine in einer Dichtung (23) aus dem Gehäuse (21) herausgeführte Stange (24) aufweist, die mit einem Stellantrieb (29-33) verbunden ist.

13. Spiegel nach Anspruch 12,
dadurch gekennzeichnet,
daß der Stellantrieb ein Hydraulikzylinder (29) und die genannte Stange dessen Kolbenstange (24) ist.

14. Spiegel nach Anspruch 13,
dadurch gekennzeichnet,
daß die beiden Zylinderräume des Hydraulikzylinders nicht ganz dicht voneinander getrennt sind und eine den Halter nach vorne drückende Feder, vorzugsweise in dem hinteren Zylinderraum, vorgesehen ist.

15. Spiegel nach einem der Ansprüche 1 bis 14,
dadurch gekennzeichnet,
daß die Spiegelfläche (28) und die äußere Oberfläche der genannten durchsichtigen Scheibe (22) in einem Winkel ($\alpha$), vorzugsweise von 1$^{\circ}$ bis 5$^{\circ}$, zueinander stehen, wobei im Falle eines Innenspiegels eines Kraftfahrzeuges der Winkel ($\alpha$) vorzugsweise nach unten geöffnet ist.

EP 0 400 589 A2

**Fig.1**

Fig. 2

# Fig. 3